# FASCICULE DE BREVET EUROPEEN

(11) **EP 0 691 266 B1**
(45) Date de publication et mention de la délivrance du brevet: **02.09.1998**
(21) Numéro de dépôt: 95401612.7
(22) Date de dépôt: 05.07.1995
(51) Int. Cl.: B65B 9/20

(54) **Machine de réalisation de sachets d'emballage utilisant un film souple et sachet d'emballage obtenu**
Vorrichtung zum Herstellen von Verpackungsbeuteln aus einer flexiblen Folie sowie der so erhaltene Beutel
Machine for fabricating package bags using a flexible film as well as the package bag thus obtained

(30) Priorité: 07.07.1994 FR 9408403
(43) Date de publication de la demande: 10.01.1996
(73) Titulaire: FLEXICO-FRANCE, F-60119 Henonville (FR)
(72) Inventeur: Bois, Henri Georges, F-92200 Neuilly sur Seine (FR)
(74) Mandataire: Texier, Christian

(56) Documents cités:
- GB-A- 2 206 556
- US-A- 5 046 300

## Description

La présente invention concerne le domaine des machines de formation , remplissage et fermeture automatiques de sachets d'emballage refermables à base de films souples, par exemple en materiau thermoplastique , équipés de profilés rapportés, notamment de profilés de fermeture à glissières mâle et femelle complémentaires .

On a déjà proposé de nombreuses machines à cet effet.

On pourra trouver des exemples de celles-ci dans les documents U.S.-A-4894975 et U.S.-A-4709533.

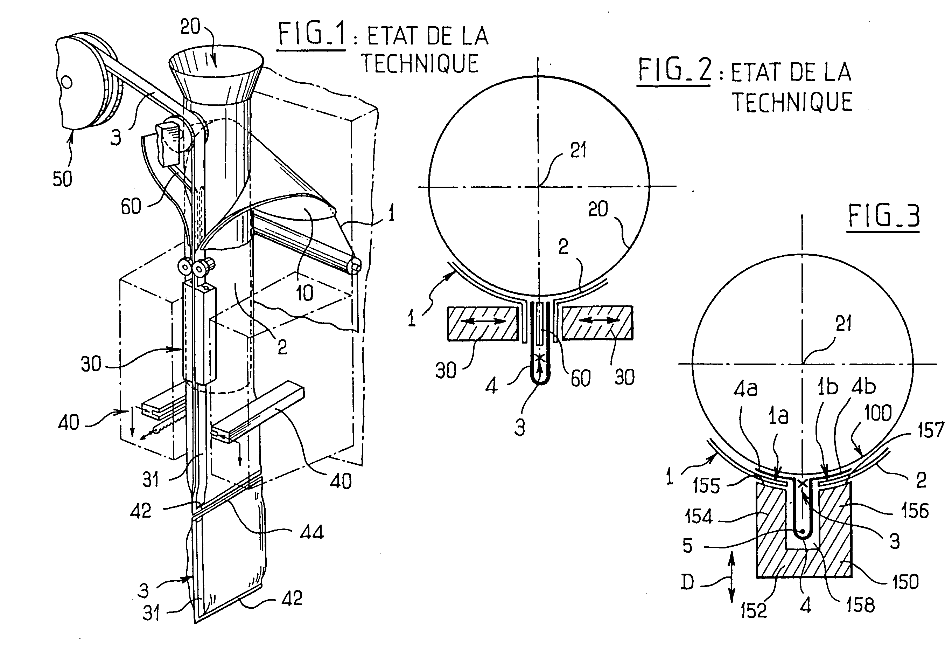

Comme on l'a représenté sur la figure 1 annexée, on connaît notamment des machines automatiques, pour la formation, le remplissage et la fermeture de sachets d'emballage à base de films en materiau thermoplastique équipés de profilés rapportés comprennent :
- un col de formage 10 qui reçoit en entrée le film 1 à l'état plan en provenance d'un dérouleur et fournit en sortie le film conformé en tube 2,
- une goulotte de remplissage 20 qui débouche dans ce col de formage 10 et par conséquent dans ledit tube 2,
- des moyens 50 d'approvisionnement en profilés 3,
- des moyens 30 de soudure longitudinale 31 pour fixer les profilés 3 sur les bords longitudinaux du film 1 et souder ces bords longitudinaux de films entre eux afin de fermer le tube 2 longitudinalement,
- des moyens 40 aptes à générer séquentiellement une première soudure transversale 42 avant qu'un produit ne soit introduit dans le tube 2 par la goulotte de remplissage 20, puis une seconde soudure transversale 44, quand le produit a été introduit dans le tube 2, pour fermer un emballage autour de ce produit.

On retrouve sur la figure 2, la base de la goulotte de remplissage 20, le film 1 (partiellement représenté) conformé en tube 2, deux machoires de soudure longitudinale 30 et les profilés de fermeture 3 déroulés le long du tube de remplissage 20, soit le long des bords longitudinaux du film 1.

On notera que sur les machines connues, les bords longitudinaux du film 1 sont pliés dans une disposition parallèle entre eux, radialement vers l'extérieur par rapport à l'axe 21 de la goulotte de remplissage 20, entre les machoires 30.

De plus les deux profilés de fermeture 3 mâle/ femelle sont souvent prévus à distance sur une bande de film thermoplastique 4 repliée sur elle-mêmes à mi-largeur pour assurer l'engagement des profilés mâle/femelle 3.

Bien entendu, en variante , ces profilés mâle/ femelle peuvent être prévus respectivement sur deux bandes 4 séparées.

Les bords longitudinaux de la bande 4 repliée sur elle-même ou des deux bandes portant respectivement les profilés 3, sont placés entre les bords longitudinaux du film 1 , comme on le voit sur la figure 2.

Les machoires de soudure longitudinale 30 ont pour but de souder chaque feuillet ou lèvre de la bande 4 respectivement sur un bord longitudinal du film 1.

Pour éviter le collage sur elle-même de la bande support portant les profilés de fermeture 3, ou encore le collage entre elles des deux bandes séparées portant respectivement ces profilés de fermeture , il est prévu sur les machines antérieures un séparateur 60 placé entre les deux feuillets de la bande 4 portant les profilés de fermeture 3.

Ce séparateur 60 a pour but d'isoler entre eux les supports 4 des profilés de fermeture 3.

Les machines conformes à l'état de la technique illustrées sur les figures 1 et 2 annexées ont déjà rendu de grands services .

Cependant elles ne donnent pas totalement satisfaction .

En particulier elles exigent deux machoires de soudure 30 dont le mouvement mécanique est assez complexe.

De plus le séparateur 60 est difficile à refroidir.

Le séparateur doit en outre être assez fin pour ne pas déformer les lèvres des profilés de fermeture.

Il est en outre fréquent que le séparateur 60 devienne très chaud par auto-échauffement , et que par conséquent les deux lèvres de la bande support 4 des profilés de fermeture finissent par adhérer au séparateur 60, ce qui créé inévitablement des problèmes de soudure, pouvant conduire à des défauts d'étanchéité.

En particulier dans ce cas les profils de fermeture 3 et la bande support 4 associée ne peuvent plus se dérouler normalement .

On constate parfois une déchirure de ces profilés de fermeture et bande support 4.

Pour tenter d'éliminer ces inconvénients, on a proposé de supprimer le séparateur 60 et de réaliser les profilés de fermeture 3 et/ou leur bande support 4 en matières complexes ou co-extrudées, de préférence bi-matière, de sorte que la matière composant les surfaces internes en regard des bandes support 4 possède un point de fusion supérieur à la matière composant la surface externe de même bande 4 en contact avec les bords longitudinaux des films 1 .

Cette dernière solution ne donne cependant pas non plus totalement satisfaction.

Elle exige en particulier l'emploi de matières sophistiquées et coûteuses si l'on veut obtenir une différence de point de fusion notable entre les matières précitées .

La présente invention a maintenant pour but de perfectionner les machines de formation, remplissage et fermeture automatiques de sachets d'emballage refermables à base de films en matériau souple connues.

Ce but est atteint selon la présente invention grâce à une machine de formation, remplissage et fermeture automatiques de sachets d'emballage, telle que définie dans la revendication 1 annexée.

D'autres caractéristiques, buts, avantages de la présente invention apparaîtront à la lecture de la description détaillée qui va suivre, et en regard des dessins annexés , donnés à titre d'exemple, non limitatif et sur lesquels :
- la figure 1 précédemment décrite représente une vue schématique en perspective d'une machine conforme à l'état de la technique ,
- la figure 2 également précédemment décrite représente une vue schématique en coupe transversale de la même machine conforme à l'état de la technique, au niveau des moyens de soudure longitudinale de celle-ci,
- la figure 3 représente une vue schématique en coupe transversale similaire d'une machine conforme à l'invention, au niveau de moyens de soudure longitudinale.

La structure générale de la machine conforme à la présente invention peut être comparable aux machines antérieures connues du type illustré sur la figure 1.

L'invention se distingue essentiellement de l'état de la technique par la structure des moyens de soudure longitudinale permettant de fixer les profilés 3 sur le film 1.

Pour cette raison on ne décrira pas par la suite la structure générale de la machine conforme à la présente invention.

On se contentera de décrire la structure innovante des moyens de soudure longitudinale illustrés sur la figure 3 .

On retrouve sur cette figure 3 le film 1 conformé en ébauche tubulaire 2 grâce au col de formage 10 et à la goulotte de remplissage 20.

On retrouve également sur la figure 3 les profilés de fermeture 3 portés par une bande support 4 constituée d'un film en matériau thermoplastique.

Là encore, le cas échéant les deux profilés de fermeture 3 pourraient être portés par des bandes en matériau thermo plastique séparées.

Les moyens de soudure longitudinale représentés sur la figure 3, conformes à la présente invention et destinés à assurer la liaison des profilés de fermeture 3 sur les bords longitudinaux du film 1 comprennent essentiellement une structure support 100 placée à l'intérieur de l'ébauche tubulaire 2 et une machoire de soudure en forme générale de U référencée 150 .

Le film 1 utilisé dans le cadre de l'invention peut être conforme aux dispositions connues de l'Homme de l'Art .

Il en est de même pour les profilés de fermeture 3.

Le cas échéant et de façon connue en soi, ces profilés 3 peuvent être associés à un cordon intégré à la bande 4 pour faciliter l'ouverture des sachets d'emballage .

De tels cordons destinés à permettre par traction la découpe du film 1 sur l'extérieur des profilés 3 sont bien connus de l'Homme de l'Art .

Ils sont appelés généralement "easy open" en langage anglo-saxon.

Sur la figure 3 on a schématisé un tel cordon sous la référence 5 à l'intérieur d'une boucle du film 4 formée en saillie sur l'extérieur des profilés de fermeture 3.

De préférence la structure support 100 conforme à la présente invention prolonge à sa base la goulotte de remplissage 20.

La machoire de soudure 150 en U possède essentiellement une âme 152 et deux ailes latérales 154-156.

La lame 150 est orientée tangentiellement par rapport à la structure support 100.

Les deux ailes 154-156 s'étendent perpendiculairement à la lame 150, et parallèlement entre elles .

Elles sont dirigées vers la structure support 100.

Cette structure 100 est avantageusement cylindrique de révolution autour de l'axe 21 de la goulotte de remplissage 20.

Comme on l'évoqué précédemment, dans le cadre de l'invention, la machine est en outre équipée de moyens de guidage aptes à guider les profilés de fermeture 3 et leur bande support 4 de sorte que les bords longitudinaux de ces bandes support 4 et les bords longitudinaux du film 1 soient superposés respectivement entre la structure support 100 et l'une des deux ailes 154-156 de la machoire 150.

Plus précisément, de préférence , comme on le voit sur la figure 3, les bords longitudinaux 1a, 1b, du film 1 sont orientés circonférenciellement sur l'extérieur de la structure support 100 et placés à distance l'un de l'autre .

La distance séparant les deux bords longitudinaux 1a, 1b est légèrement supérieure au double de l'épaisseur de la bande support 4 des profilés de fermeture 3 .

Ces bords longitudinaux 1a, 1b du film 1 sont placés entre la structure support 100 et respectivement les deux ailes 154-156 de la machoire de soudure 150 .

La boucle formée par la bande support 4 située entre les profilés de fermeture 3 et le cordon 5 s'étend de préférence dans une direction générale radiale par rapport à l'axe 21 de la goulotte de remplissage, dans la chambre interne 158 de la machoire de soudure 150 .

Cependant les moyens de guidage précités sont adaptés pour diriger les deux lèvres internes 4a, 4b de la bande support 4 dans une direction circonférentielle, soit perpendiculairement à la boucle précitée, entre la structure support 100 et les bords longitudinaux 1a, 1b du film 1.

Ainsi les lèvres 4a, 4b s'étendent respectivement de part et d'autre du tube support 100.

La machoire de soudure 150 est mobile radialement et, comme cela est schématisé par la flèche référencée D sur la figure 3 entre une position de repos écartée du tube support 100 et une position de soudure rapprochée de cette structure support.

Lorsque la machoire 150 est placée en position écartée de repos, le film 1 et les profilés de fermeture 3 associés à la bande support 4 sont libres.

La machine assure par conséquent une avance séquencée du film 1 et de ces profilés 3 associés à leur bande support 4.

En revanche lorsque la machoire 150 est séquentiellement déplacée en rapprochement du tube support 100, l'aile 154 pince le bord longitudinal 1a du film 1 et la lèvre 4a de la bande support 4 contre le tube support 100 tandis que la seconde aile 156 pince le bord longitudinal 1b du film 1 et la lèvre 4b de la bande support 4 contre le même tube support 100.

Par apport de chaleur la machoire de soudure 150 assure alors la fixation des lèvres 4a, 4b respectivement sur les bords longitudinaux 1a, 1b du film 1.

La présente invention évite tous risques d'auto-échauffement d'un séparateur, puisque celui-ci est supprimé.

En outre l'invention permet d'utiliser des profilés de fermeture 3 et une bande support 4 monomatière et de matière tout à fait commune .

De plus ces profilés de fermeture 3 et/ou bande support 4 peuvent être réalisés dans la même matière que le film 1 ce qui présente un énorme avantage sur le plan de la qualité et de la fiabilité de la soudure obtenue.

De préférence la largeur de la chambre interne 158 de la machoire 150, c'est à dire la distance séparant les surfaces internes des deux ailes 154-156 est supérieure à la largeur de la boucle formée entre les profilés de fermeture 3 et le cordon 5.

Ainsi, cette chambre 158 facilite le refroidissement de l'ensemble .

La présente invention s'applique en particulier mais non exclusivement aux machines à conditionner verticales.

Bien entendu la présente invention n'est pas limitée aux modes de réalisation particuliers qui viennent d'être décrits, mais s'étend à toute variante conforme à son esprit.

En particulier l'invention n'est pas limitée à la formation de sachets à la base de films en materiau thermoplastique.

Elle peut également trouver application dans la formation de sachets à base de films souples de nature différente , par exemple à base d'aluminium ou de papier.

Eventuellement on peut envisager de disposer les profilés de fermeture 3 non pas au niveau des bords longitudinaux du film 1, mais sur l'intérieur de ce film 1 à distance des bords longitudinaux de celui-ci.

Il suffit pour cela de prévoir des premiers moyens de soudure longitudinale adaptés pour relier entre eux les bords longitudinaux du film , et des seconds moyens de soudure longitudinale conformes aux dispositions représentées sur la figure 3, pour souder la lèvre de la bande support 4 des profilés de fermeture sur la surface interne du film, en utilisant pour cela un support interne 100 et des ailes 154-156 d'une machoire de soudure en U comme décrit précédemment.

Selonla disposition représentée sur la figure 3, les lèvres 4a, 4b de la bande support 4 sont placées entre les bords longitudinaux 1a, 1b du film et la structure support 100.

En variante on peut cependant envisager la disposition inverse.

C'est à dire que l'on peut envisager de placer les lèvres 4a, 4b de la bande support 4 sur l'extérieur des bords longitudinaux 1a, 1b du film 1, entre ces bords longitudinaux 1a, 1b et les ailes 154-156 de la machoire de soudure .

En outre, si l'invention s'applique aux films en materiau thermo plastique munis de profilés de fermeture à glissière mâle et femelle complémentaires comme indiqué précédemment, l'invention n'est pas limitée à l'utilisation de ce type particulier de profilés.

Elle s'étend à tout type de profilés susceptibles d'équiper un film d'emballage, tels que par exemple des cordons intégrés au film pour faciliter l'ouverture de celui-ci , des liserés de décoration par exemple des liserés colorés ou encore des liserés gradués pour le repérage du volume de produit contenu dans l'emballage .

Par ailleurs l'invention concerne également bien entendu des emballages obtenus par la mise en oeuvre de la machine précitée.

Selon une variante de machoire de soudure en U 150 peut être formée de deux pièces séparées correspondant respectivement aux deux ailes 154, 156. Ceci facilite le plaquage respectivement de chaque aile 154, 156 contre la structure support 100 et garantit la qualité de la soudure obtenue.

Par ailleurs, bien entendu, la surface d'extrémité 155, 157 des ailes 154, 156 active pour la soudure doit être complémentaire de la surface de la structure support 100, soit avantageusement en secteur de cylindre.

## Revendications

1. Machine de formation , remplissage et fermeture automatiques de sachets refermables à base d'un film (1) en matériau souple, par exemple thermoplastique, muni de profilés rapportés (3), notamment de profilés de fermeture à glissières mâle et femelle complémentaires, comprenant :
- des moyens d'alimentation en film souple (1),
- des moyens (50) d'alimentation en profilés
- des moyens (30 , 150) de fixation des profilés (3) sur le film souple (1),
caractérisée par le fait que les moyens de fixation (150) des profilés (3) sur le film souple (1) comprennent d'une part une structure support (100) placée à l'intérieur d'une ébauche tubulaire (2) des sachets d'emballage formée à l'aide du film (1) et d'autre part une machoire de soudure (150) en forme générale de U, mobile radialement entre une position de repos écartée de et une position de soudure rapprochée de la structure support (100), la machoire de soudure en U (150) comprenant une âme (152) orientée tangentiellement par rapport à la structure support (100) et deux ailes (154, 156) parallèles entre elles, orthogonales à l'âme (152) et dirigées vers la structure support (100) et que la machine comprend en outre des moyens de guidage des profilés tels que les bords longitudinaux (4a, 4b) de bande support (4) des profilés (3) et les bords longitudinaux (1a, 1b) du film (1) soient superposés respectivement entre la structure support (100) et l'une des deux ailes (154, 156) de la machoire desoudure en U (150).

2. Machine selon la revendication 2, caractérisée par le fait que la structure support (100) prolonge la base d'une goulotte de remplissage (20).

3. Machine selon l'une des revendications 1 ou 2, caractérisée par le fait que la machoire en U (150) possède une chambre interne (158) de largeur supérieure à l'épaisseur des profilés et de leur bande support (4) pour permettre les refroidissements de l'ensemble .

4. Machine selon l'une des revendications 1 à 3 caractérisée par le fait que les moyens de guidage sont conçus pour guider les bords longitudinaux (1a, 1b) du film (1) dans une direction circonférentielle, en maintenant un espacement entre ces bords longitudinaux .

5. Machine selon l'une des revendications 1 à 4, caractérisée par le fait que les moyens de guidage sont conçus pour former une boucle sur une bande support des profilés (3) dans une direction radiale par rapport à la structure support (100) et plier les lèvres (4a, 4b) de cette bande support perpendiculairement par rapport à ladite boucle.

6. Machine selon l'une des revendications 1 à 5, caractérisée par le fait que les moyens de guidage sont adaptés pour placer les bords longitudinaux (4a, 4b) des bandes support (4) des profilés (3) entre les bords longitudinaux (1a, 1b) du film (1) et la structure support (100).

7. Machine selon l'une des revendications 1 à 5, caractérisée par le fait que les moyens de guidage sont adaptés pour placer les bords longitudinaux (4a, 4b) des bandes supports (4) des profilés (3) entre les bords longitudinaux (1a, 1b) du film (1) et les ailes (154, 156) de la machoire de soudure en U.

8. Machine selon l'une des revendications 1 à 7, caractérisée par le fait que la machoire de soudure en U (150) est formée de deux pièces séparées (154, 156) conçues respectivement pour la soudure d'un bord longitudinal (4a, 4b) de bande support (4) des profilés (3) sur un bord longitudinal (1a, 1b) du film (1).

9. Machine selon l'une des revendications 1 à 8, caractérisée par le fait que la surface active d'extrémité (155, 157) de chaque aile (154, 156) est complémentaire de la surface externe de la structure support.

10. Emballage obtenu à l'aide d'une machine conforme à l'une des revendications 1 à 9.

## Claims

1. A machine for automatically forming, filling, and closing reclosable sachets based on a film (1) of flexible material, e.g. of thermoplastic material, and provided with add-on strips (3), in particular complementary, male and female slideway closure strips, the machine comprising:
• flexible film feed means (1);
• strip feed means (50); and
• means (30, 150) for fixing strips (3) on the flexible film (1),
the machine being characterized by the fact that the means (150) for fixing the strips (3) on the flexible film (1) comprise firstly a support structure (100) placed inside a tubular blank (2) for packaging sachets formed using the film (1), and secondly a heat-sealing jaw (150) that is generally of channel-section, movable radially between a rest position remote from the support structure (100) and a heat-sealing position close to the support structure (100), the channel-section jaw (150) having a web (152) extending tangentially relative to the support structure (100) and two mutually parallel flanges (154, 156) orthogonal to the web (152) and directed towards the support structure (100), and by the fact that the machine also comprises means for guiding strips so that the longitudinal edges (4a, 4b) of strip support tape (4) and the longitudinal edges (1a, 1b) of the film (1) are superposed respectively between the support structure (100) and one of the two flanges (154, 156) of the channel section heat-sealing jaw (150).

2. A machine according to claim 1, characterized by the fact that the support structure (100) extends the base of a filler chute (20).

3. A machine according to claim 1 or 2, characterized by the fact that the channel-section jaw (150) has an internal chamber (152) of width greater than the thickness of the strips together with their support tape (4) to enable the assembly to be cooled.

4. A machine according to any one of claims 1 to 3, characterized by the fact that the guide means are designed to guide the longitudinal edges (1a, 1b) of the film (1) in a circumferential direction, while maintaining a space between said longitudinal edges.

5. A machine according to any one of claims 1 to 4, characterized by the fact that the guide means are designed to form a loop on a strip support tape (3) in a radial direction relative to the support structure (100) and to fold the lips (4a, 4b) of said support tape perpendicularly relative to said loop.

6. A machine according to any one of claims 1 to 5, characterized by the fact that the guide means are adapted to place the longitudinal edges (4a, 4b) of the strip support tape (4) between the longitudinal edges (1a, 1b) of the film (1) and the support structure (100).

7. A machine according to any one of claims 1 to 5, characterized by the fact that the guide means are adapted to place the longitudinal edges (4a, 4b) of the strip support tapes (4) between the longitudinal edges (1a, 1b) of the film (1) and the flanges (154, 156) of the channel-section heat-sealing jaw.

8. A machine according to anyone of claims 1 to 7, characterized by the fact that the channel-section heat-sealing jaw (150) is made up of two separate parts (154, 156) respectively designed for heat-sealing one of the longitudinal edges (4a, 4b) of the strip support tape (4) on a longitudinal edge (1a, 1b) of the film (1).

9. A machine according to any one of claims 1 to 8, characterized by the fact that the end active surface (155, 157) of each flange (154, 156) is complementary to the outer surface of the support.

10. Packaging obtained using a machine according to any one of claims 1 to 9.

## Patentansprüche

1. Maschine für die automatische Herstellung, Befüllung und den Verschluß von wieder verschließbaren Beuteln, die aus einer Folie (1) aus einem flexiblen Material, wie zum Beispiel einem thermoplastischen Material hergestellt sind, und die mit angesetzten Profilteilen (3) ausgestattet sind, und zwar insbesondere mit zwei ineinandergreifenden Profilteilen nach der Art eines Reißverschlusses, und die folgendes aufweist:
- Mittel für die Zufuhr einer flexiblen Folie (1);
- Mittel (50) für die Zufuhr von Profilteilen;
- Mittel (30, 150) für die Befestigung der Profilteile (3) an einer flexiblen Folie (1),
**dadurch gekennzeichnet, daß**
die Mittel für die Befestigung (150) der Profilteile (3) an der flexiblen Folie (1) einerseits eine Trägerstruktur (100) aufweisen, welche im Inneren eines schlauchförmigen Rohteils (2) der aus der flexiblen Folie (1) hergestellten Verpackungsbeutel angeordnet ist, und andererseits eine U-förmige Schweißzangenbacke (150) enthalten, die radial zwischen einer abgespreizten Ruhestellung und einer angenäherten Position der Trägerstruktur (100) beweglich ist, und daß die U-förmige Schweißzangenbacke (150) einen Steg (152) aufweist, der tangential gegenüber der Schweißzangenbacke (100) ausgerichtet ist, und daß zwei parallel zueinander verlaufende Fleier (154, 156) vorgesehen sind, welche rechtwinklig zu dem Steg (152) angeordnet und gegenüber der Trägerstruktur (100) ausgerichtet sind, und dadurch daß die Maschine weiterhin Mittel für die Führung der Profilteile (3) aufweist, die so beschaffen sind, daß die Längskanten (4a, 4b) der Einfassung (4) der Profilteile (3) und die Längskanten (1a, 1b) der Folie jeweils zwischen der Trägerstruktur (100) und einem der Fleier (154, 156) der U-förmigen Schweißzangenbacke (150) übereinander liegend angeordnet sind.

2. Maschine nach Anspruch 1,
**dadurch gekennzeichnet, daß**
die Trägerstruktur (100) die Basis eines Einflüllstutzens (20) verlängert.

3. Maschine nach einem der Ansprüche 1 oder 2,
**dadurch gekennzeichnet, daß**
die U-förmige Schweißzangenbacke (150) mit einer inneren Kammer (158) ausgerüstet ist, deren Breite größer ist, als die Dicke der Profilteile und ihrer Einfassung (4), damit das Teil abgekühlt werden kann.

4. Maschine nach einem der Ansprüche 1 bis 3,
**dadurch gekennzeichnet, daß**
die Führungsmittel so konzipiert sind, daß sie die Längskanten (1a, 1b) der Folie (1) in Umfangsrichtung leiten und einen Abstand zwischen diesen Längskanten einhalten können.

5. Maschine nach einem der Ansprüche 1 bis 4,
**dadurch gekennzeichnet, daß**
die Führungsmittel so konzipiert sind, daß sie auf der Einfassung der Profilteile (3) in radialer Richtung gegenüber der Trägerstruktur (100) eine Schlaufe bilden und die Längskanten (4a, 4b) dieser Einfassung im rechten Winkel zu dieser Schlaufe verbiegen.

6. Maschine nach einem der Ansprüche 1 bis 5,
**dadurch gekennzeichnet, daß**
die Führungsmittel so ausgelegt sind, daß sie die Längskanten (4a, 4b) des Tragerstreifens (4) der Profilteile (3) zwischen den Längskanten (1a, 1b) der Folie (1) und der Trägerstruktur (100) plazieren können.

7. Maschine nach einem der Ansprüche 1 bis 5,
**dadurch gekennzeichnet, daß**
die Führungsmittel so ausgelegt sind, daß sie die Längskanten (4a, 4b) der Einfassung (4) der Profilteile (3) zwischen den Längskanten (1a, 1b) der Folie (1) und den Fleiern (154, 156) der U-förmigen Schweißzangenbacke plazieren können.

8. Maschine nach einem der Ansprüche 1 bis 7,
**dadurch gekennzeichnet, daß**
die U-förmige Schweißzangenbacke (150) aus zwei getrennten Teilen (154, 156) besteht, die jeweils für die Verschweißung einer Längskante (4a, 4b) der Einfassung (4) der Profilteile (3) mit einer Längskante (1a, 1b) der Folie (1) konzipiert sind.

9. Maschine nach einem der Ansprüche 1 bis 8,
**dadurch gekennzeichnet, daß**
sich die aktive Endfläche (155, 157) jeder der Fleier (154, 156) an die Außenfläche der Trägerstruktur anpaßt.

10. Verpackungsbeutel, welcher mit Hilfe einer Maschine hergestellt wird, wie sie in einem der Ansprüche 1 bis 9 offenbart ist.
